**Europäisches Patentamt**

(19) **European Patent Office**

**Office européen des brevets**

(11) Veröffentlichungsnummer: **0 034 210**
**B1**

(12) # EUROPÄISCHE PATENTSCHRIFT

(45) Veröffentlichungstag der Patentschrift:
18.04.84

(51) Int. Cl.³: **B 64 C 27/48**

(21) Anmeldenummer: **80107548.2**

(22) Anmeldetag: **03.12.80**

(54) **Rotor eines Drehflügelflugzeugs.**

(30) Priorität: **19.02.80 DE 3006088**

(43) Veröffentlichungstag der Anmeldung:
**26.08.81 Patentblatt 81/34**

(45) Bekanntmachung des Hinweises auf die Patenterteilung:
**18.04.84 Patentblatt 84/16**

(84) Benannte Vertragsstaaten:
**FR GB IT**

(56) Entgegenhaltungen:
**DE - A - 2 007 202**
**DE - A - 2 451 860**
**DE - A - 2 826 656**
**FR - A - 1 496 905**
**FR - A - 2 186 380**
**FR - A - 2 454 963**
**US - A - 4 037 988**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Schwarz, Alois, Dipl.-Ing., Ahornweg 21,**
**D-8011 Putzbrunn (DE)**
Erfinder: **Mautz, Karlheinz, Brennerstrasse 13,**
**D-8012 Ottobrunn (DE)**
Erfinder: **Schröder, Alexander, Ing. grad.,**
**Uhlandstrasse 39, D-8012 Ottobrunn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rotor eines Drehflügelflugzeugs

Die deutsche Offenlegungsschrift 2 712 706 betrifft einen Rotor gemäss dem Oberbegriff des Patentanspruchs 1, bei dem die Verlängerung der Blattwurzel über die druckbelastbare Verbindung «Rotorblatt/Blatthalterung» hinausgehend eine der gabelförmigen Blatthalterung angepasste Ausführungsform des Rotorblattes darstellt mit der Möglichkeit der Blattverschwenkung in eine Faltlage um die dann als Schwenkachse nutzbare Längsachse der druckbelastbaren Verbindung. Im Bestreben nach weitestgehenden Einsparungen an Gewicht, Material und Kosten laufen sämtliche Weiterbildungen hierzu auf einen Verzicht auf eine bauliche Anpassung der Blattwurzel an die Blattanschlussmittel hinaus, d.h. es werden herkömmliche bewährte Rotorblätter aus faserverstärktem Kunststoff mit zu Blattanschlussschlaufen gelegten Fasergurten verwendet, aber dem zufolge auch gesonderte Zwischenstücke zur Überbrückung der Distanz von der Blattwurzel zur Wurzel der Blatthalterung bzw. dem hier anzuordnenden Blattwinkellager notwendig.

Der Erfindung liegt die Aufgabe zugrunde, solche die druckbelastbare Verbindung überbrückende Zwischenstücke bei einem Rotor der eingangs genannten Art einzusparen ohne auf den Vorteil eines Rotorblattes aus faserverstärktem Kunststoff mit an der Blattwurzel zu Schlaufen gelegten Gurten, also eines insbesondere im Bereich der Blattwurzel hochbelastbaren Rotorblattes verzichten zu müssen.

Diese Aufgabe ist gemäss dem Kennzeichen des Patentanspruchs 1 gelöst, also mittels einer die druckbelastbare Verbindung «Rotorblatt/Blatthalterung» umbauenden Blattwurzel, bei der für die Blattfliehkraftaufnahme und -übertragung auf Zug hochbelastbare Faserschlaufen, welche in jeder gewünschten Ausführung ohne Schwierigkeiten herstellbar und somit dem gewünschten gedrungenen Aufbau der Blattwurzel anpassbar sind sowie bei gleichem Querschnitt wie eine Reingewebestruktur unter Zugbelastung etwa die dreifache Festigkeit aufweisen, in der Vereinigung mit zug- und druckbelastbaren Zwischenlagen und Stützstücken einen in allen Belastungsrichtungen grösstmöglichen kompakten Schichtkörper (zumindest als Blattwurzel) ergeben, welcher sogar für den Fall einer Beschädigung einer Faserschlaufe funktionsmässig redundant ist. Daneben wird nicht zuletzt auch noch die Forderung nach Reproduzierbarkeit (für eine wirtschaftliche Serienfertigung) erfüllt.

Ein Ausführungsbeispiel der Erfindung und ihrer in den Unteransprüchen gekennzeichneten Weiterbildungen wird nachfolgend näher erläutert. Hierzu zeigt die Zeichnung in

Fig. 1 in perspektivischer Ansicht die für einen Rotorkopfanschluss eines Rotorblattes (eines Drehflügelflugzeugs) einander zugeordneten Teile,

Fig. 2 aus Fig. 1 in einem vergrösserten vertikalen Längsschnitt nur eine der vier Blatthalterungen des Rotorkopfes in Verbindung mit der Rotorblattwurzel,

Fig. 3 und 4 von der Blattwurzel je eine Lage des gemäss Fig. 2 als Schichtkörper ausgebildeten Rotorblattes.

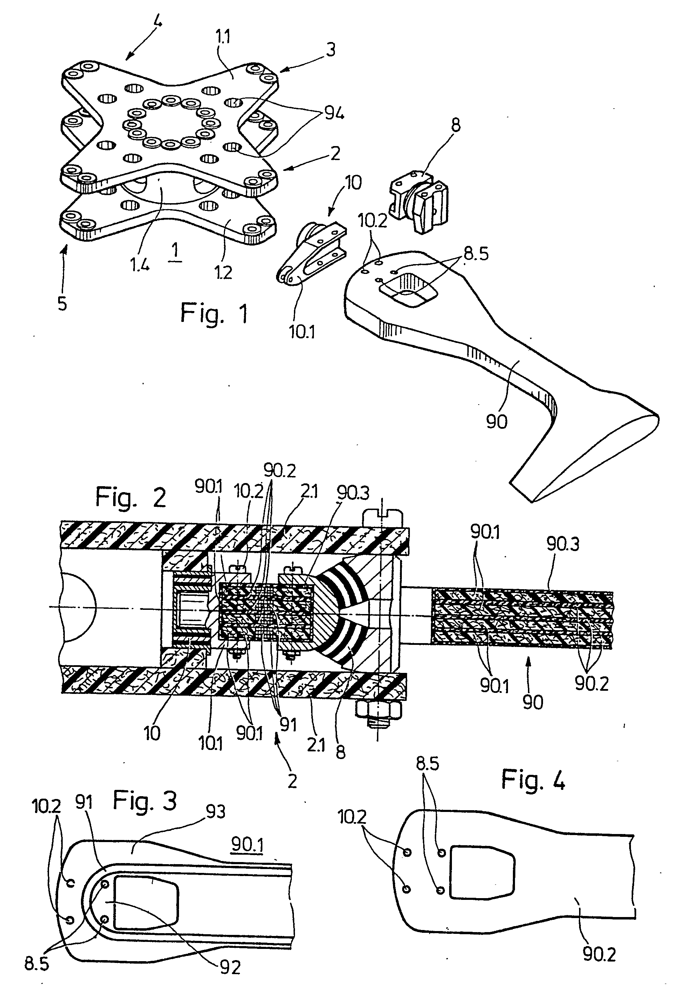

Bei einem Drehflügelflugzeug hat der Rotor (wie derjenige der DE-OS 2 712 706) für den unmittelbaren Anschluss an einer nicht dargestellten Rotorwelle einen vollständig aus Faserverbundwerkstoff bestehenden Rotorkopf 1 (sog. zentrales Kopfteil), gemäss Fig. 1 mit, beispielsweise vier, gabelförmigen Blatthalterungen bzw. Rotorarmen 2 bis 5 aufgrund des gewählten Verbundes zweier deckungsgleicher, sternförmiger Platten 1.1, 1.2 mit einem koaxialen Zwischenstück 1.4. Dem entsprechend ist auch, wie insbesondere Fig. 2 zeigt, für den Anschluss des jeweiligen Rotorblattes bzw. seiner Blattwurzel 90 im zugeordneten gabelförmigen Rotorarm 2 ein Axial-Radial-Elastomerlager 8 vorgesehen; es erfüllt die Funktion einer die Blattfliehkräfte aufnehmenden, also druckbelastbaren und aber hierbei Blattdrehwinkelbewegungen zulassenden Verbindung zwischen der Blattwurzel 90 und den beiden (Gabel-)Schenkeln 2.1 des Rotorarmes. Die Blattwurzel 90 geht über dieses Elastomerlager 8 so weit hinaus, dass sie mit einem an der Wurzel des Rotorarmes 2 als Blattwinkellager sitzenden Radial-Elastomerlager 10 verbunden werden kann; letzteres ist mit seinem blattwurzelseitigen Lagerteil 10.1 zugleich Anlenkteil für einen nicht dargestellten Blattverstellhebel (auch sog. Steuerhebel).

Für diesen Anschluss des Rotorblattes bzw. seiner Blattwurzel 90 unmittelbar an der Blattlagerung (Elastomerlager 8, 10) ohne sonst übliche Blattbeschläge ist ein mehrlagiger Blattaufbau aus faserverstärktem Kunststoff vorgesehen, beispielsweise Glasfasern in einer Kunstharzmatrix. Gemäss Fig. 2 folgt von aussen nach innen lagenweise abwechselnd ausgehend von einer äusseren Lage 90.1 (Fig. 3) eine Lage 90.2 (Fig. 4), welche jeweils als Zwischenlage zweier Lagen 90.1 diese stoffschlüssig vereinigt. Die Lagenzahl richtet sich nach den Festigkeitsanforderungen; es sind (aus Redundanzgründen) mindestens zwei Lagen 90.1 gemäss Fig. 3 mit einer Zwischenlage 90.2 gemäss Fig. 4 vorzusehen. Der Unterschied im jeweiligen Aufbau der Lagen 90.1, 90.2 zueinander ist durch die unterschiedlichen Ursachen der Blattwurzelbelastung begründet, nämlich sowohl Blattfliehkräfte als auch Biegemomente aus den Blattschlag- und Blattschwenkbewegungen. Zur Blattfliehkraftaufnahme und -übertragung erstreckt sich in Blattlängsrichtung je Lage 90.1 (Fig. 3) eine das Axial-Radial-Elastomerlager 8 einschliesslich seiner blattwurzelseitigen Stützpunktstelle bzw. den betreffenden Anschlussbohrungen 8.5 umschlingende Faserschlaufe 91 unidirektionaler Faserorientierung. Die Faserschlaufe 91 ist durch an ihren Längsrändern stoffschlüssig anschliessende innen- und aussenseitige Stützstücke 92 bzw. 93 mit kreuzweiser Faserorientierung (z.B. Gewebelaminat) gefasst, mittels denen im stoffschlüssigen Verbund mit den Lagen 90.1 deckungsgleichen Zwischenlagen 90.2 (Fig. 4), die ebenfalls eine kreuzweise Faserorientierung aufweisen, die für die Blattmomentenaufnahme nötige Aussteifung der Blattwurzel 90 sichergestellt ist; das wird durch eine die Lagen 90.1, 90.2 insgesamt allseits umschliessende Decklage 90.3 (ebenfalls mit kreuzweiser Faserorientierung) noch gesteigert. Sämtliche Anschlussbohrungen 8.5 und 10.2 für die Elastomerlager 8 bzw. 10 durchtrennen ausschliesslich das Fasermaterial mit kreuzweiser Faserorientierung, so dass die Faserschlaufen 91 für die ihnen zugedachte Funktion als im wesentlichen Zugkräfte aufnehmende und übertragende Elemente voll wirksam werden können.

Da sämtliche vorbeschriebenen Blattelemente einwandfrei maschinell reproduzierbar sind, kann das Rotorblatt nach einem Baukastensystem und somit besonders wirtschaftlich erstellt werden.

Am Rande bleibt noch zu erwähnen, dass für die eingangs erwähnte Blattschwenkung in eine Faltlage im Rotorkopf Durchgangsbohrungen 94 so angeordnet sind, dass hierüber die Befestigungsbolzen 10.2 für das Radial-Elastomerlager 10 gezogen werden können.

## Patentansprüche

1. Rotor eines Drehflügelflugzeugs mit über Blattwinkellager in radial nach aussen sich erstreckenden Blatthalterungen eines Rotorkopfes drehwinkelbeweglichen Rotorblättern, wobei zum einen der Rotorkopf, insbesondere als ein integraler Faserverbundwerkstoffkörper, aus zwei im wesentlichen deckungsgleichen, sternförmigen Platten in koaxialer Anordnung unter stoffschlüssiger Zwischenfügung zumindest eines Distanzstückes gebildet wird und zum anderen in der jeweiligen gabelförmigen Blatthalterung zwischen ihren beiden (Gabel-)Schenkeln und der zugehörigen Rotorblattwurzel eine in Blattlängsrichtung druckbelastbare, aber die Blattdrehwinkelbewegungen zulassende Verbindung hergestellt und das hierüber hinausgehende Blattwurzelende mit dem Blattwinkellager verbunden ist, dadurch gekennzeichnet, dass das Rotorblatt wenigstens im Blattwurzelbereich aus Faserverbundwerkstoff mit mindestens zwei Lagen (90.1) jeweils mit einer die druckbelastbare Verbindung (Elastomerlager 8) mit ihrer blattwurzelseitigen Stützpunktstelle (Anschlussbohrung 8.5) umschlingenden, in Blattlängsrichtung sich erstreckenden Faserschlaufe (91) unidirektionaler Faserorientierung und aus einer diese Lagen (90.1) stoffschlüssig vereinigenden Zwischenlage (90.2) mit kreuzweiser Faserorientierung besteht, wobei die jeweilige Faserschlaufe (91) an ihren Längsrändern zumindest im Umschlingungsbereich der druckbelastbaren Verbindung (Elastomerlager 8) durch innen- und aussenseitige Stützstücke (92 bzw. 93) gefasst ist.

2. Rotor nach Anspruch 1, dadurch gekennzeichnet, dass die Lagen (90.1, 90.2) insgesamt allseits von einer Decklage (90.3) mit kreuzweiser Faserorientierung umschlossen sind.

3. Rotor nach Anspruch 1 und 2, dadurch gekennzeichnet, dass blattwurzelseitige Anschlussbohrungen (8.5 bzw. 10.2) für die druckbelastbare Verbindung (Elastomerlager 8) und das Blattwinkellager (Elastomerlager 10) ausschliesslich durch die Decklage (90.3), Stützstücke (92, 93) und Zwischenlage (90.2) verlaufen.

## Claims

1. A rotor of a rotary-wing aircraft comprising rotor blades which are rotary-angle-mobile by way of blade angle bearings in radially outwardly extending blade holders of a rotor head, in which respect on the one hand the rotor head, which is more especially in the form of an integral fibre composite material body, is formed from two substantially coincident star-shaped plates in coaxial arrangement along with self-locking interpolation of at least one distance piece and on the other hand in the respective fork-shaped blade holder between its two (fork-) limbs and the associated rotor-blade root there is provided a connection which is pressure-loadable in the longitudinal direction of the blade but which permits the blade rotary angle motions and the blade-root end which goes therebeyond is connected to the blade angle bearing, characterised in that the rotor blade consists, at least in the blade root region, of fibre composite material with at least two layers (90.1) in each case with a fibre loop (91) of unidirectional fibre orientation which loops around the pressure-loadable connection (elastomer bearing 8) with its blade-root-sided supporting point location (connection bore 8.5) and which extends in the logitudinal direction of the blade and of an intermediate layer (90.2) having a crosswise fibre orientation which unites these layers (90.1) in a self-locking manner, in which respect the respective fibre loop (91) is grasped at its longitudinal edges, at least in the looping region of the pressure-loadable connection (elastomer bearing 8), by internal and external supporting pieces (92 or 93 respectively).

2. A rotor according to claim 1, characterised in that the layers (90.1, 90.2) are enclosed as a whole on all sides by a surface layer (90.3) having a crosswise fibre orientation.

3. A rotor according to claim 1 and 2, characterised in that blade-root-sided connection bores (8.5 or 10.2 respectively) for the pressure-loadable connection (elastomer bearing 8) and the blade angle bearing (elastomer bearing 10) extend exclusively through the surface layer (90.3), the supporting pieces (92, 93) and the intermediate layer (90.2).

## Revendications

1. Rotor d'aéronef à voilure tournante muni de pales déplaçables angulairement à travers des paliers d'angle de pale dans des fixations de pale, s'étendant radialement vers l'extérieur, d'une tête de rotor, ladite tête de rotor étant d'une part formée, notamment en un corps intégral de matériau composite fibreux, de deux plaques en genre d'étoiles essentiellement superposables disposées coaxialement avec interposition sous assemblage par les matériaux d'au moins une pièce entretoise, une liaison sollicitable en compression en direction longitudinale de la pale mais autorisant les déplacements angulaires de celle-ci étant établie, dans chaque fixation en fourche de pale, entre les deux branches de fourche de ladite fixation et le pied de pale correspondant et l'extrémité de pied de pale dépassant de ladite liaison étant reliée au palier d'angle de pale, rotor caractérisé par le fait que, au moins dans sa zone de pied en matériau composite fibreux, la pale de rotor se compose d'au moins deux couches (90.1) qui comportent chacune une boucle de fibres (91) à orientation des fibres unidirectionnelle s'étendant en direction longitudinale de la pale et entourant la liaison sollicitable en compression (palier en élastomère 8) avec son emplacement d'appui ponctuel (perçage de jonction 8.5) situé du côté du pied de pale ainsi que d'une couche intermédiaire (90.2) à orientation des fibres croisée qui unit ces couches (90.1) en assemblage par les matériaux, chaque boucle de fibres (91) étant en même temps enserrée, au moins dans la zone d'entourage de la liaison sollicitable en compression (palier en élastomère 8), sur ses bords longitudinaux par des pièces de soutien intérieure et extérieure (92 et 93).

2. Rotor selon la revendication 1, caractérisé par le fait que les couches (90.1, 90.2) sont entourées globalement de toutes parts par une couche de couverture (90.3) à orientation des fibres croisée.

3. Rotor selon l'une quelconque des revendications 1 ou 2, caractérisé par le fait que les perçages de jonction (8.5, 10.2) pour la liaison sollicitable en compression (palier en élastomère 8) et pour le palier d'angle de pale (palier en élastomère 10) traversent exclusivement la couche de couverture (90.3), les pièces de soutien (92, 93) et la couche intermédiaire (90.2).

Fig. 1

Fig. 2

Fig. 3

Fig. 4